# EUROPEAN PATENT SPECIFICATION

(11) **EP 1 698 551 B1**
(45) Date of publication and mention of the grant of the patent: **25.01.2012**
(21) Application number: 06003396.6
(22) Date of filing: 20.02.2006
(51) Int. Cl.: B62M 25/04, B62L 3/02

(54) **Bicycle control apparatus**
Fahrradsteuervorrichtung
Dispositif de commande de bicyclette

(30) Priority: 03.03.2005 US 906738
(43) Date of publication of application: 06.09.2006
(73) Proprietor: SRAM, LLC., Chicago, IL 60642 (US)
(72) Inventor: Shipman, Christopher, Chicago Illinois 60640 (US); Jordan, Brian, Chicago Illinois 60618 (US); Wesling, Kevin, Lombard Illinois 60148 (US); Solberg, Kent, Woodstock Illinois 60098 (US)
(74) Representative: Thum, Bernhard

(56) References cited:
- EP-A- 0 035 372
- EP-A- 0 399 356
- JP-U- 62 161 097
- JP-U- 63 168 186
- US-A1- 2002 104 401
- US-A1- 2002 124 679
- US-B2- 6 718 843

## Description

### Background of the Invention

The present invention relates to bicycle control apparatuses, and more particularly, to a bicycle control apparatus including a brake lever rotatable about a brake lever axis and a single shift lever rotatable about a shift lever axis, according to the preamble of claim 1.

A bicycle control apparatus that includes both a brake lever assembly and a shift lever assembly as for example shown in US 2002/0104401 A1 may be mounted to a handlebar of a road bike. Looking to FIG. 1, the road bike typically includes a drop-style handlebar 10 having an upper portion 12 extending horizontally across a bicycle frame (not shown), a curved portion 14 extending downward from the upper portion 12, and a lower portion 16 extending rearward toward the rider. This type of handlebar provides numerous hand grip positions for the rider, including positions at various heights. One available hand position is on the upper portion 12, another somewhere on the curved or lower portions 14, 16, commonly referred to as "riding in the drops."

A conventional bicycle control apparatus typically includes a housing 18, a brake lever assembly 20 and a shift lever assembly 22. The housing 18 is mounted to the curved portion 14 of the handlebar 10 and is positioned to extend forward, away from the rider. The housing 18 typically includes a contoured surface 24 for the rider to rest his hands on while riding. Accordingly, the housing 18 is typically positioned such that contoured surface 24 forms an extension of the upper portion 12 of the handlebar 10.

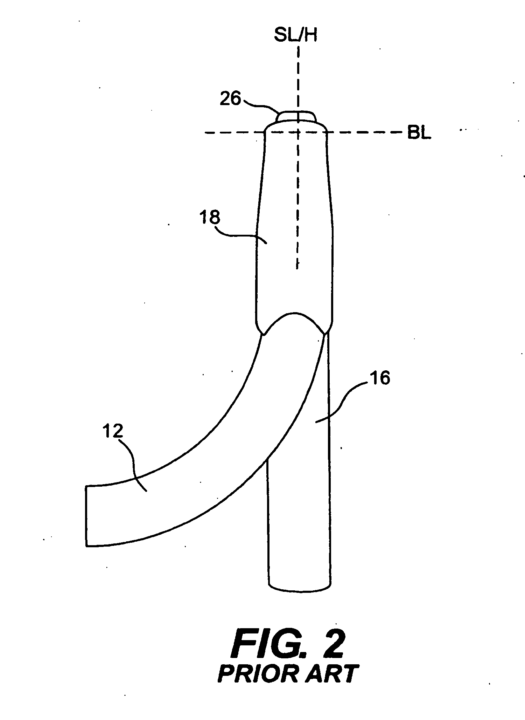

Looking to FIG. 2, the housing 10 has a centerline H. The brake lever assembly 20 includes a brake lever 26 operably mounted to the housing 18 to pivot rearward, toward the rider, about a brake lever axis BL, to slow the bicycle. The brake lever axis BL is aligned perpendicular to centerline H. The shift lever assembly 22 includes a shift lever 28 that rotates about a shift lever axis SL. The shift lever axis SL is aligned parallel to the centerline H of the housing 18 and perpendicular to the brake lever axis BL. The brake lever 26 may be reached by the rider from several hand grip positions, including when the rider's hands are on the contoured surface 24 of the housing 18, or on the drops of the handlebar 10. The rider usually places his hands in the drops 14, 16 for more power and better aerodynamics to maximize speed. Naturally, it is important that the rider maintains a firm grip on the handlebar 10 for greater control and power.

Looking to FIG. 3, at rest, the rider's hand grips the lower portion 16 of the handlebar 10, with the rider's fingers wrapped around the handlebar 10. To shift gears, the rider must first extend one or two fingers toward shift lever 28, then push shift lever 28 laterally, or inward, toward the centerline of the bike (FIGS. 4 and 5). As the rider further displaces the shift lever 28 toward the bike centerline, the more he must reach to maintain contact with shift lever 28. So much so, that toward the end of the shift operation, the rider must at least partially release his grip on the handlebar and rotate his hand about the handlebar to move the shift lever 28 enough to complete a shift (FIG. 6). Releasing the grip, and stretching and twisting the hand is not only uncomfortable, but creates a dangerous riding condition where the rider may readily lose control of the bicycle, especially when riding on rough terrain. Accordingly, there is a need to provide an integrated brake and shift lever device that allows full actuation of the shift lever without changing hand positions on the handlebar.

This problem is also known from other prior art. For example JP 62-161097 U refers in the embodiment according to Fig. 2 to 4 to a gearshift lever for a bicycle being arranged on one protruding end of a brake lever bracket which itself is mounted to the handlebar of the bicycle. The gearshift lever is rotatable about a first rotational axis, whereas the shift lever is rotatable about a second rotational axis, the second rotational axis of the shift lever forming an angle therebetween of less than 90 degrees. However, this arrangement has the substantial problem that the shift lever is not operable by the rider when he places his hands on the drops of the handlebar as it is arranged far away from the handlebar at the front end of the brake lever housing.

JP 63-168186 refers to an operating device for a bicycle comprising a gearshift lever being attached to the side surface a bracket supporting a brake lever. The bracket itself is mounted to the handlebar of the bicycle. Furthermore, a lever support which supports the gearshift lever and a trajectory modifier means which attaches this lever support to the bracket are provided in order to ensure that the movement trajectory of the gearshift lever from an operation starting position to an operation ending position can be modified.

However, also In this assembly of a bicycle control the gearshift lever is arranged In a position relative to the handlebar such that it might be necessary for the rider to at least partially release his grip on the handlebar to move the shift lever to an extent sufficient to complete a shifting operation.

From EP 0 035 372 A2 and EP 0 399 356 A1 cycle handlebars for a bicycle are known comprising bracket members supporting brake control levers and gearshift levers wherein the brake control levers are pivotally mounted with ald of pivot pins In downwardly projecting portions of the bracket members. Moreover, the gear control lever as disclosed In EP 0 035 372 A2 is supported with respective pivot pins in an upwardly projecting portion of the bracket member, whereas the gear shift lever and the bracket lever as disclosed in EP 0 399 356 A1 are supported by the same pin, the gear shift lever protruding In an opposite direction to the brake control lever. Also these arrangements of the brake control levers and the gear shift levers protruding In opposite directions result in an non-ergonomic design of the handlebar which can lead to the aforementioned problems for a rider during the shifting.

US 2002/0124679 A1 discloses a combined gear change and brake control unit for a bicycle comprising a brake control lever pivotally mounted on a support body around a first axis, a gear change control unit carried by the support body comprising a shaft turning around a second axis either orthogonal or substantially orthogonal to the first axis, wherein the shaft carries a pulley on which an end portion of a control cable of a derailleur is destined to be wound and in which the shaft is subject to a return torque tending to tum the shaft towards a direction In which the cable is released. A gear change lever is arranged behind the brake control lever, i.e. at an initial shift lever position between the handlebar and the brake lever, for controlling the rotation of that shaft in a direction of winding the cable and a button lever Is arranged on a side of the support body for controlling the rotation of the shaft in the release direction of the cable.

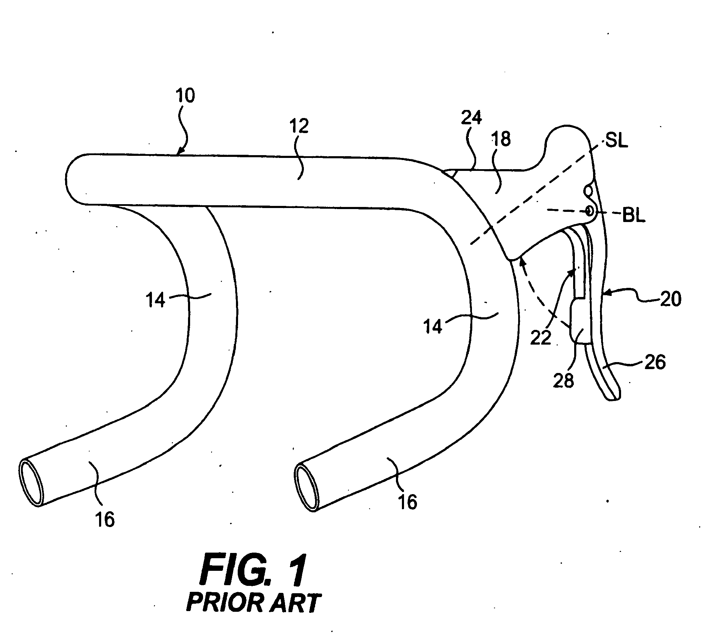

Comparable arrangements in view of the positioning of the shift lever between the brake lever and the handlebar are also known from US 5,479,776 and US 4,100,820. Also these arrangements function as described In regard to Figs. 1 to 6 causing the same problems. The arrangement according to US 4,100,820 furthermore affects the gripping of the handlebar when placing the hands on the drops thereof.

Finally, US 6,718,843 B2 discloses a gear-shift and brake-control assembly with one brake lever and two levers which are used for respectively reducing and increasing the gear ratio.

### Summary of the Invention

The present invention provides a bicycle control apparatus mountable to a bicycle handlebar according to the features of claim 1. In one embodiment of the present invention, the bicycle control apparatus includes a housing mountable to the handlebar, a brake lever assembly and a shift lever assembly. The housing has a centerline. The brake lever assembly includes a brake lever operatively connected to the housing and rotatable about a brake lever axis. The shift lever assembly includes a single shift lever for performing a cable-pull operation and a cable-release operation, the shift lever being disposed between the handlebar and the brake lever and operatively connected to the housing as well as rotatable about a shift lever axis. The shift lever axis forms an angle with the brake lever axis of 10 to 80 degrees. Such an angle permits the shift lever to deflect both inwardly, toward the centerline of the bike, and rearward, toward the rider, forming an arcuate path during actuation that more closely follows the natural arcuate path of the fingers as they pivot about the knuckles. The arcuate motion of the shift lever allows the rider to shift while maintaining a full grip on the handlebar. In a preferred embodiment of the invention, the shift axis forms an angle of 50 to 70 degrees with the brake axis.

These and other features and advantages of the invention will be more fully understood from the following description of various embodiments of the invention, taken together with the accompanying drawings.

### Brief Description of the Drawings

In the drawings:
FIG. 1 is a perspective view of a prior art bicycle control apparatus;
FIG 2. is a top view of the prior art bicycle control apparatus;

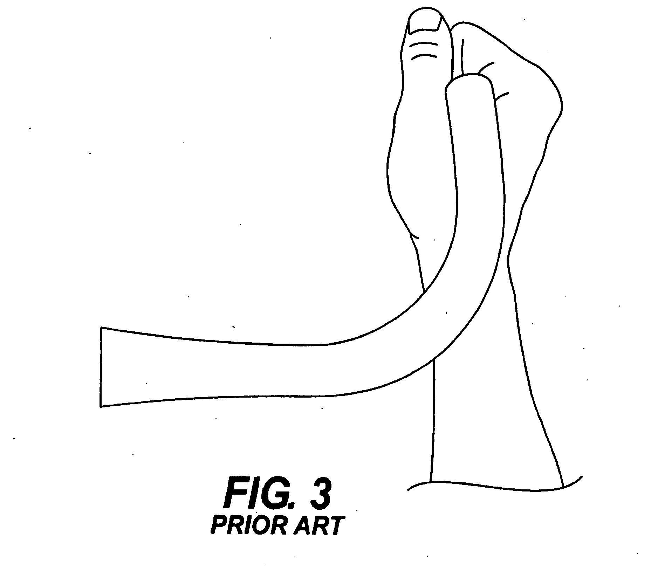

FIG. 3 is a top view of a rider's hand gripping a bicycle handlebar;

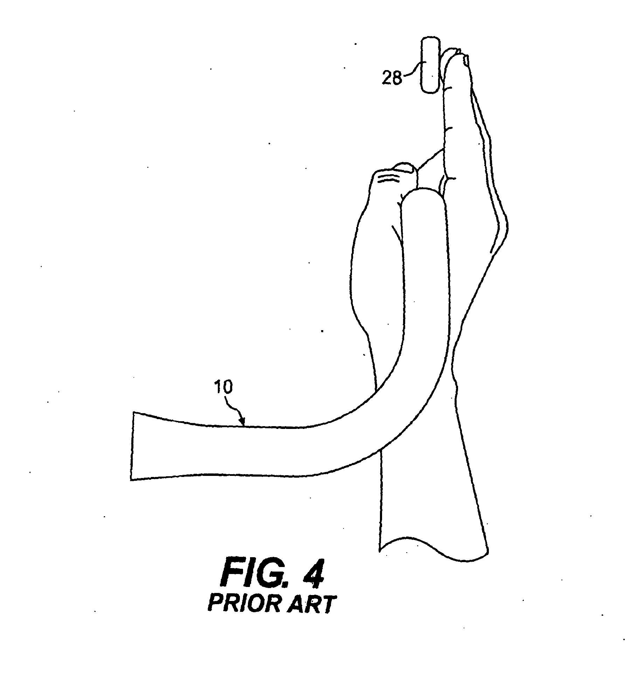

FIG. 4 is a top view of a rider's hand gripping a bicycle handlebar, while initiating a shift operation;

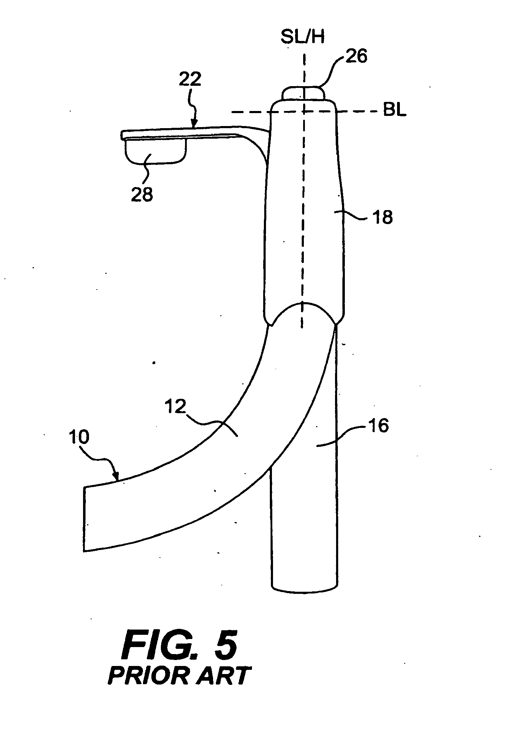

FIG. 5 is a top view of the prior art bicycle control apparatus of FIG. 1 showing a shift lever in a deflected position;

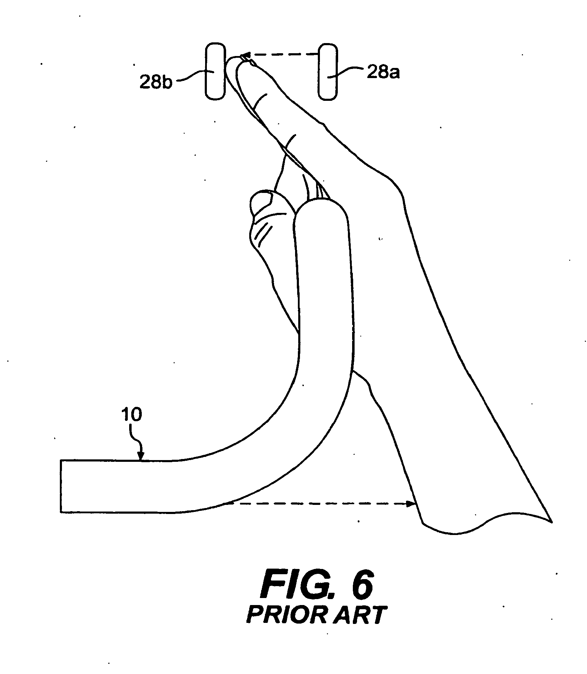

FIG. 6 is a top view of a rider's hand gripping the handlebar, showing in particular, the rider's hand movement through a shifting operation from shift lever position 28a to shift lever position 28b;

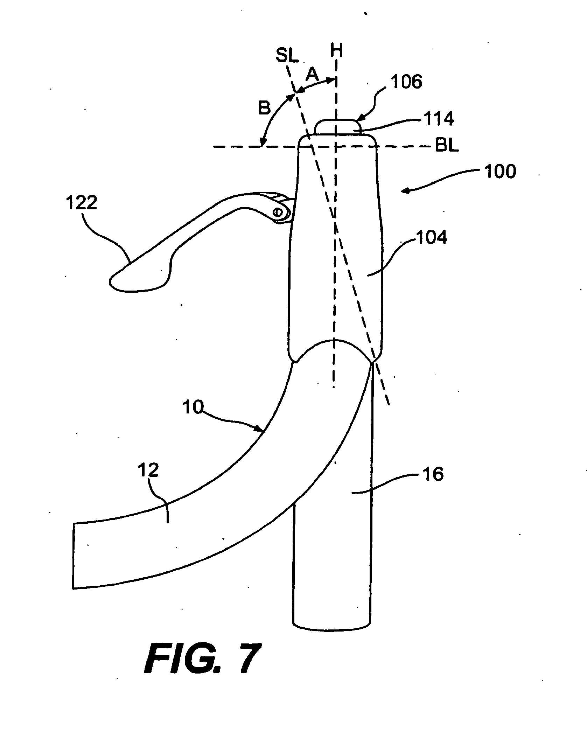

FIG. 7 is a top view of a bicycle control apparatus according to one embodiment of the present Invention;

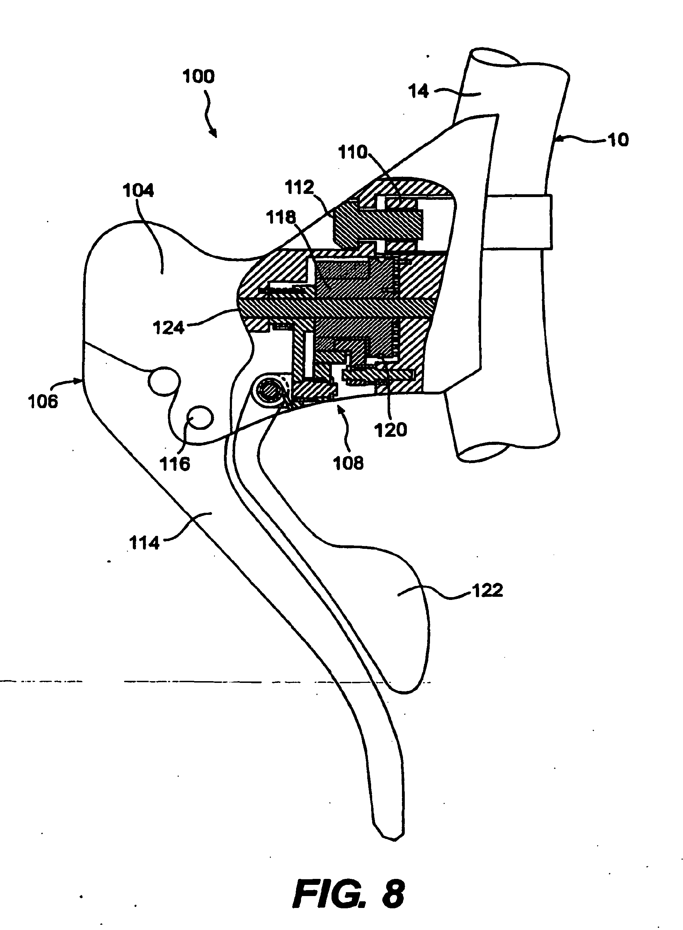

FIG. 8 is a partial cross-sectional view of the bicycle control apparatus of FIG. 7; and

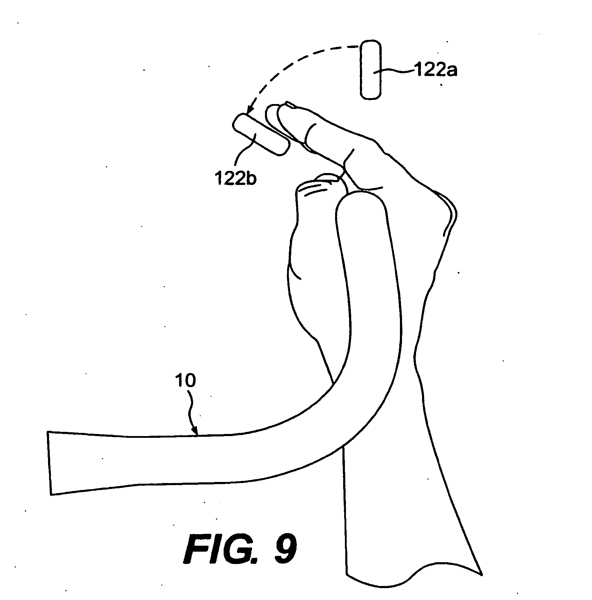

FIG. 9 is a top view of a rider's hand gripping the handlebar, showing in particular, the rider's hand movement through a shifting operation from shift initial lever position 122a to shift lever position 122b.

### Detailed Description

FIGS. 7 and 8 illustrate a bicycle control apparatus 100 mountable to a bicycle handlebar 10, according to one embodiment of the present invention. The bicycle control apparatus 100 generally includes a housing 104, a brake lever assembly 106, and a shift lever assembly 108. The bicycle handlebar 10 shown is for the drop-style type, typically found on a road bike; however, this invention is applicable to any style handlebar found on different types of bicycles. Looking to FIG. 1, the handlebar 10 includes an upper portion 12 extending across the bicycle frame (not shown), a curved portion 14 extending downward from the upper portion, and a lower portion 16 extending rearward toward the rider. The curved portion 14 and the lower portion 16 are commonly referred to as the "drops." The housing 104 is typically mounted to the curved portion 14 of the handlebar 102 by a clamp 110 and a bolt 112, the housing having a centerline H.

The brake lever assembly 106 includes a brake lever 114 mounted rotatably to a pivot 116 extending through the housing 104, the pivot 6 forming a brake lever axis BL. The brake lever axis BL is typically perpendicular to the centerline H of the housing 104, but need not be so oriented.

The shift lever assembly 108 generally includes a cable spool 118 for pulling and releasing a control cable 120 connected to a gear change mechanism (not shown), and a shift lever 122 for rotating the cable spool 118 in cable-pull and cable-release directions. This invention is applicable to various shift lever assembly configurations and is not limited to the embodiment of FIG. 8. Typically, the shift lever 122 is rotatably mounted to a pivot 124 extending from the housing 104, pivot 124 forming a shift lever axis SL. Alternatively, the shift lever 122 may be rotatably mounted to the brake lever assembly 106. The brake lever axis BL need not intersect the shift lever axis SL. Additionally, the shift lever axis SL need not intersect the housing centerline H. According to the invention, shift lever axis SL and the brake lever axis BL are configured to form an angle B therebetween in the range of 10 to 80 degrees, and optimally in the range of 50 to 70 degrees. In yet other embodiments, the shift lever axis SL and the housing centerline H may be configured to form an angle A therebetween in the range of 10 to 50 degrees, and optimally in the range of 20 to 40 degrees. . So configured, the shift lever 122 is permitted to deflect both rearward, toward the rider, and inwardly, toward the bicycle centerline, forming an arcuate path deflection that follows the natural arcuate path of the rider's fingers as they pivot about the knuckles of the hand during lever actuation. The arcuate motion of the shift lever 122 allows the rider to actuate the shift lever 122 through one or more gear positions without removing or loosening his grip on the handlebar 10, permitting shifts with greater power, comfort, and control (FIG. 9).

While this invention has been described by reference one or more preferred embodiments, it should be understood that numerous changes could be made within the scope of the following claims.

## Claims

1. A bicycle handlebar arrangement having a bicycle control apparatus (100) mounted to a bicycle handlebar (10), the bicycle control apparatus (100) comprising:
a housing (104) mounted to the bicycle handlebar (10);
a brake lever assembly (106) having a brake lever (114) operatively connected to the housing (104) and rotatable about a brake lever axis (BL), wherein the brake lever (114) defines a brake lever plane of motion perpendicular to the brake lever axis (BL); and
a shift lever assembly (108) having a single shift lever (122) for performing a cable-pull operation and a cable-release operation, the shift lever (122) being operatively connected to one of the housing (104) and the brake lever assembly (106) and rotatable about a shift lever axis (SL), wherein the shift lever (122) defines a shift lever plane of motion perpendicular to the shift lever axis (SL), and the shift lever (122) being disposed at an Initial shift lever position (122a) in the space between the handlebar (10) and the brake lever (114),
**characterized in that** the brake lever plane of motion and the shift lever plane of motion forming an angle therebetween in the range of 10 to 80 degrees.

2. The bicycle handlebar arrangement of claim 1,
wherein the brake lever plane of motion and the shift lever plane of motion form an angle therebetween in the range of 50 to 70 degrees.

3. The bicycle handlebar arrangement of any of claims 1 or 2,
wherein the housing (104) has a centreline (H), and wherein the shift lever axis (SL) and the centerline (H) form an angle therebetween of less than 90 degrees.

4. The bicycle handlebar arrangement of claim 3,
wherein the housing centerline (H) and the shift lever axis (SL) form an angle therebetween in the range of 10 to 50 degrees.

5. The bicycle handlebar arrangement of claim 3,
wherein the housing centerline (H) and the shift lever axis (SL) form an angle therebetween in the range of 20 to 40 degrees.

6. A bicycle control apparatus (100) mountable to a bicycle handlebar (10) for use in a blcyde handlebar arrangement, the bicycle control apparatus (100) comprising:
a housing (104) mountable to the bicycle handlebar (10);
a brake lever assembly (106) having a brake lever (114) operatively connected to the housing (104) and rotatable about a brake lever axis (BL), wherein the brake lever (114) defines a brake lever plane of motion perpendicular to the brake lever axis (BL); and
a shift lever assembly (108) having a single shift lever (122) for performing a cable-pull operation and a cable-release operation, the shift lever (122) being operatively connected to one of the housing (104) and the brake lever assembly (106) and rotatable about a shift lever axis (SL), wherein the shift lever (122) defines a shift lever plane of motion perpendicular to the shift lever axis (SL), and in use the shift lever (122) being disposed at an initial shift lever position (122a) between the handlebar (10) and the brake lever (114) in said brake lever plane of motion, **characterized in that** the brake lever plane of motion and the shift lever plane of motion forming an angle therebetween in the range of 10 to 80 degrees.

7. The bicycle control apparatus (100) of claim 6,
wherein the brake lever plane of motion and the shift lever plane of motion form an angle therebetween in the range of 50 to 70 degrees.

8. The bicycle control apparatus (100) of any of claims 6 or 7,
wherein the housing (104) has a centreline (H), and wherein the shift lever axis (SL) and the centerline (H) form an angle therebetween of less than 90 degrees.

9. The bicycle control apparatus (100) of claim 8,
wherein the housing centerline (H) and the shift lever axis (SL) form an angle therebetween in the range of 10 to 50 degrees.

10. The bicycle control apparatus (100) of claim 8,
wherein the housing centerline (H) and the shift lever axis (SL) form an angle therebetween in the range of 20 to 40 degrees.

## Patentansprüche

1. Fahrradlenkeranordnung mit einer auf einem Fahrradlenker (10) angebrachten Fahrradsteuervorrichtung (100), wobei die Fahrradsteuervorrichtung (100) umfasst:
ein auf dem Fahrradlenker (10) angebrachtes Gehäuse (104);
eine Bremshebelanordnung (106) mit einem mit dem Gehäuse (104) in Wirkverbindung stehenden und um eine Bremshebelachse (BL) schwenkbaren Bremshebel (114), wobei der Bremshebel (114) eine sich senkrecht zu der Bremshebelachse (BL) erstreckende Bremshebelbewegungsebene definiert; und
eine Schalthebelanordnung (108) mit einem einzigen Schalthebel (122) zum Ausführen eines Kabelanzieh- und eines Kabelfreigabevorgangs, wobei der Schalthebel (122) entweder mit dem Gehäuse (104) oder mit der Bremshebelanordnung (106) in Wirkverbindung steht und um eine Schalthebelachse (SL) schwenkbar ist, und wobei der Schalthebel (122) eine sich senkrecht zu der Schalthebelachse (SL) erstreckende Schalthebelbewegungsebene definiert, und der Schalthebel (122) an einer Schalthebelausgangsposition (122a) in dem Zwischenraum zwischen dem Fahrradlenker (10) und dem Bremshebel (114) angeordnet ist,
**dadurch gekennzeichnet, dass** die Bremshebelbewegungsebene und die Schalthebelbewegungsebene einen im Bereich von 10° bis 80° liegenden Winkel einschließen.

2. Fahrradlenkeranordnung nach Anspruch 1,
wobei die Bremshebelbewegungsebene und die Schalthebelbewegungsebene einen im Bereich von 50° bis 70° liegenden Winkel einschließen.

3. Fahrradlenkeranordnung nach einem der Ansprüche 1 oder 2,
wobei das Gehäuse (104) eine Mittelachse (H) aufweist, und wobei die Schalthebelachse (SL) und die Mittelachse (H) einen Winkel von weniger als 90° einschließen.

4. Fahrradlenkeranordnung nach Anspruch 3,
wobei die Mittelachse (H) des Gehäuses (104) und die Schalthebelachse (SL) einen im Bereich von 10° bis 50° liegenden Winkel einschließen.

5. Fahrradlenkeranordnung nach Anspruch 3,
wobei die Mittelachse (H) des Gehäuses (104) und die Schalthebelachse (SL) einen im Bereich von 20° bis 40° liegenden Winkel einschließen.

6. Fahrradsteuervorrichtung (100), die zur Verwendung in einer Fahrradlenkeranordnung auf einem Fahrradlenker (10) anbringbar ist, wobei die Fahrradsteuervorrichtung (100) umfasst:
ein auf dem Fahrradlenker (10) anbringbares Gehäuse (104);
eine Bremshebelanordnung (106) mit einem mit dem Gehäuse (104) in Wirkverbindung stehenden und um eine Bremshebelachse (BL) schwenkbaren Bremshebel (114), wobei der Bremshebel (114) eine sich senkrecht zu der Bremshebelachse (BL) erstreckende Bremshebelbewegungsebene definiert; und
eine Schalthebelanordnung (108) mit einem einzigen Schalthebel (122) zum Ausführen eines Kabelanzieh- und eines Kabelfreigabevorgangs, wobei der Schalthebel (122) entweder mit dem Gehäuse (104) oder mit der Bremshebelanordnung (106) in Wirkverbindung steht und um eine Schalthebelachse (SL) schwenkbar ist, und wobei der Schalthebel (122) eine sich senkrecht zu der Schalthebelachse (SL) erstreckende Schalthebelbewegungsebene definiert, und der Schalthebel (122) bei Gebrauch an einer Schalthebelausgangsposition (122a) zwischen dem Fahrradlenker (10) und dem Bremshebel (114) in der Bremshebelbewegungsebene angeordnet ist,
**dadurch gekennzeichnet, dass** die Bremshebelbewegungsebene und die Schalthebelbewegungsebene einen im Bereich von 10° bis 80° liegenden Winkel einschließen.

7. Fahrradsteuervorrichtung (100) nach Anspruch 6,
wobei die Bremshebelbewegungsebene und die Schalthebelbewegungsebene einen im Bereich von 50° bis 70° liegenden Winkel einschließen.

8. Fahrradsteuervorrichtung (100) nach einem der Ansprüche 6 oder 7, wobei das Gehäuse (104) eine Mittelachse (H) aufweist, und wobei die Schalthebelachse (SL) und die Mittelachse (H) einen Winkel von weniger als 90° einschließen.

9. Fahrradsteuervorrichtung (100) nach Anspruch 8,
wobei die Mittelachse (H) des Gehäuses (104) und die Schalthebelachse (SL) einen im Bereich von 10° bis 50° liegenden Winkel einschließen.

10. Fahrradsteuervorrichtung (100) nach Anspruch 8,
wobei die Mittelachse (H) des Gehäuses (104) und die Schalthebelachse (SL) einen im Bereich von 20° bis 40° liegenden Winkel einschließen.

## Revendications

1. Agencement de guidon de bicyclette ayant un appareil de commande de bicyclette (100) monté sur un guidon de bicyclette (10), l'appareil de commande de bicyclette (100) comprenant :
un logement (104) monté sur le guidon de bicyclette (10) ;
un ensemble de levier de frein (106) ayant un levier de frein (114) opérationnellement connecté au logement (104) et rotatif autour d'un axe de levier de frein (BL), dans lequel le levier de frein (114) définit un plan de mouvement de levier de frein perpendiculaire à l'axe de levier de frein (BL) ; et
un ensemble de levier de changement de vitesse (108) ayant un levier de changement de vitesse (122) unique pour exécuter une opération de traction sur un câble et une opération de libération de câble, le levier de changement de vitesse (122) étant opérationnellement connecté à l'un du logement (104) et de l'ensemble de levier de frein (106) et rotatif autour d'un axe de levier de changement de vitesse (SL), dans lequel le levier de changement de vitesse (122) définit un plan de mouvement de levier de changement de vitesse perpendiculaire à l'axe de levier de changement de vitesse (SL), et le levier de changement de vitesse (122) étant disposé à une position initiale (122a) de levier de changement de vitesse dans l'espace entre le guidon (10) et le levier de frein (114),
**caractérisé en ce que** le plan de mouvement de levier de frein et le plan de mouvement de levier de changement de vitesse formant un angle entre ceux-ci dans la plage de 10 à 80 degrés.

2. Agencement de guidon de bicyclette selon la revendication 1,
dans lequel le plan de mouvement de levier de frein et le plan de mouvement de levier de changement de vitesse forment un angle entre ceux-ci dans la plage de 50 à 70 degrés.

3. Agencement de guidon de bicyclette selon l'une quelconque des revendications 1 ou 2,
dans lequel le logement (104) a une ligne centrale (H), et dans lequel l'axe de levier de changement de vitesse (SL) et la ligne centrale (H) forment un angle entre ceux-ci de moins de 90 degrés.

4. Agencement de guidon de bicyclette selon la revendication 3,
dans lequel la ligne centrale (H) de logement et l'axe de levier de changement de vitesse (SL) forment un angle entre ceux-ci dans la plage de 10 à 50 degrés.

5. Agencement de guidon de bicyclette selon la revendication 3,
dans lequel la ligne centrale (H) de logement et l'axe de levier de changement de vitesse (SL) forment un angle entre ceux-ci dans la plage de 20 à 40 degrés.

6. Appareil de commande de bicyclette (100) pouvant être monté sur un guidon de bicyclette (10) pour une utilisation dans un agencement de guidon de bicyclette, l'appareil de commande de bicyclette (100) comprenant :
un logement (104) pouvant être monté sur le guidon de bicyclette (10) ;
un ensemble de levier de frein (106) ayant un levier de frein (114) opérationnellement connecté au logement (104) et rotatif autour d'un axe de levier de frein (BL), dans lequel le levier de frein (114) définit un plan de mouvement de levier de frein perpendiculaire à l'axe de levier de frein (BL) ; et
un ensemble de levier de changement de vitesse (108) ayant un levier de changement de vitesse (122) unique pour exécuter une opération de traction sur un câble et une opération de libération de câble, le levier de changement de vitesse (122) étant opérationnellement connecté à l'un du logement (104) et de l'ensemble de levier de frein (106) et rotatif autour d'un axe de levier de changement de vitesse (SL), dans lequel le levier de changement de vitesse (122) définit un plan de mouvement de levier de changement de vitesse perpendiculaire à l'axe de levier de changement de vitesse (SL), et à l'utilisation le levier de changement de vitesse (122) étant disposé à une position initiale (122a) de levier de changement de vitesse entre le guidon (10) et le levier de frein (114) dans ledit plan de mouvement de levier de frein,
**caractérisé en ce que** le plan de mouvement de levier de frein et le plan de mouvement de levier de changement de vitesse formant un angle entre ceux-ci dans la plage de 10 à 80 degrés.

7. Appareil de commande de bicyclette (100) selon la revendication 6,
dans lequel le plan de mouvement de levier de frein et le plan de mouvement de levier de changement de vitesse forment un angle entre ceux-ci dans la plage de 50 à 70 degrés.

8. Appareil de commande de bicyclette (100) selon l'une quelconque des revendications 6 ou 7,
dans lequel le logement (104) a une ligne centrale (H), et dans lequel l'axe de levier de changement de vitesse (SL) et la ligne centrale (H) forment un angle entre ceux-ci de moins de 90 degrés.

9. Appareil de commande de bicyclette (100) selon la revendication 8,
dans lequel la ligne centrale (H) de logement et l'axe de levier de changement de vitesse (SL) forment un angle entre ceux-ci dans la plage de 10 à 50 degrés.

10. Appareil de commande de bicyclette (100) selon la revendication 8,
dans lequel la ligne centrale (H) de logement et l'axe de levier de changement 1de vitesse (SL) forment un angle entre ceux-ci dans la plage de 20 à 40 degrés.
